# EUROPEAN PATENT APPLICATION

(11) **EP 2 608 449 A1**
(43) Date of publication of application: **26.06.2013**
(21) Application number: 12198375.3
(22) Date of filing: 20.12.2012
(51) Int. Cl.: H04L 12/18, H04L 12/58, H04L 29/08

(54) **Method and system for having a conference across im systems**

(30) Priority: 22.12.2011 CN 201110434704
(71) Applicant: Huawei Technologies Co., Ltd., Longgang District, Shenzhen Guangdong 518129 (CN)
(72) Inventor: Quan, Anjing, Shenzhen Guangdong 518129 (CN)
(74) Representative: Körber, Martin Hans

(57) **Abstract**

This invention provides a solution of having a multiuser conference across IM systems in the context of IM Agent and a set of essential management functions required by a multiuser conference system. A method for having a conference across IM systems is provided, comprising: receiving a conference creation request sent from a conference creating user by an IM agent, establishing a conference room and generating a list of conference accounts, adding user accounts of the conference creating user on various IM systems to the list of conference accounts; receiving an invitation request sent by the conference creating user, the invitation request comprising an account of a user to be invited; the IM agent sending an invitation request in a message format of a corresponding IM system to the user to be invited using an IM system user account of the conference creating user that has been logged in. In this invention, a conference creating user creates a conference room through the IM agent, and realizes conference message communication with and between users on various IM systems through IM agent forwarding.

## Description

### FIELD OF THE INVENTION

The present invention relates to the IM (instant messenger) field, and more specifically, to a method and system for having a conference across IM systems.

### BACKGROUND OF THE INVENTION

Currently, there are many IM systems on the Internet, such as MSN (Microsoft Service Network), ICQ, Yahoo messenger, QQ, etc. these IM systems are all self-dependent isolated systems. In order to contact friends in different IM systems, some users need to register accounts in those systems respectively. As a result, when these users contact their friends, client software for different IM systems must be initiated, and thus rather inconvenient in operation. Specifically, it is almost impossible if a user wants to have a conference on the same topic with friends in different systems simultaneously, unless repeatedly entering relevant content in clients of the plurality of systems.

With regard to the above situation, a novel IM Agent product has emerged in markets, which is a device capable of accessing a plurality of IM systems simultaneously, with its own client provided at the same time. A user can simultaneously sign in and use different IM system services through the client, avoiding tedious operations of having to initiate various client software when services of several IM system services are needed to be used.

However, the existing IM Agent product can merely achieve unified agent accessing to various IM systems on one terminal application, and it cannot provide a multiuser conference across the IM systems.

### SUMMARY OF THE INVENTION

A solution of having a multiuser conference across IM systems in the context of IM Agent and a set of essential management functions required by a multiuser conference system are provided in this invention.

In one aspect of this invention, a method for having a conference across IM systems is provided, comprising:
an IM agent receiving a conference creation request sent from a conference creating user, establishing a conference room and generating a list of conference accounts, and adding user accounts of the conference creating user on various IM systems to the list of conference accounts;
receiving an invitation request sent by the conference creating user, the invitation request comprising an account of a user to be invited; the IM agent sending an invitation request in a message format of a corresponding IM system to the user to be invited using an IM system user account of the conference creating user that has been logged in, wherein the IM system user account of the conference creating user that is used to send the invitation request and the account of the invited user belong to the same IM system;
receiving a confirmation message from the invited user using the IM system user account of user creating the conference that has been logged in, and adding the account of the invited user to the list of conference accounts;
receiving a conference message from a first member, the first member being one of conference room members, wherein the conference members consisted of the conference creating user and the invited users who have sent their confirmation messages; according to the conference message and the list of conference accounts, forwarding the conference message to a conference room member related to said conference message in a message format of the corresponding IM system.

According to another aspect of this invention, an IM agent across IM systems is provided, comprising:
a receiving module, for receiving a conference creation request from a conference creating user; receiving an invitation request of the conference creating user and a confirmation message of a corresponding invited user, the invitation request comprising an account of the invited user; receiving conference messages from the conference creating user and the invited users;
a creation module, for creating a conference room and generating a list of conference accounts according to the conference creation request, and adding user accounts on various IM systems of the conference creating user to the list of conference accounts; adding accounts of invited users to the list of conference accounts according to their confirmation messages;
a forwarding module, for generating an invitation request in a message format corresponding to an IM system of the invited user according to the list of conference accounts and the invitation request; generating a conference message in a message format of the corresponding IM system according to the list of conference accounts and a conference room member related to the conference message;
a sending module, for sending the invitation request subjected to message format conversion of the forwarding module to an invited user using an IM system user account of the conference creating user that has been logged in, wherein the IM system user account of the conference creating user used to send the invitation request and the account of the invited user belong to the same IM system; sending a conference message subjected to message format conversion of the forwarding module to a conference room member related to the conference message according to the conference message and the list of conference accounts.

In a third aspect of this invention, a system of having a conference across IM systems is provided, comprising:
a conference-creating user terminal, for sending a conference creation request, and sending an invitation request after a conference room has been established, the invitation request containing an account of an invited user; receiving a conference message from an IM agent and sending a conference message to the conference room;
an IM agent, for receiving a conference creation request sent by a conference creating user, establishing a conference room and generating a list of conference accounts, adding user accounts on various IM systems of the conference creating user into the list of conference accounts; receiving an invitation request sent by the conference creating user, sending an invitation request in a message format of a corresponding IM system to an invited user using an IM system user account of the conference creating user that has been logged in, wherein the IM system user account of the conference creating user that is used to send the invitation request and an account of the invited user belong to the same IM system; receiving a confirmation message from the invited user using the IM system user account of the conference creating user that has been logged in, and adding the account of the invited user into the list of conference accounts; receiving a conference message from a first member, the first member being one of conference room members consisted of the conference creating user and one or more invited users; forwarding the conference room message in a message format of a corresponding IM system to a conference member related to the conference message according to the conference message and the list of conference accounts;
an invited user terminal, for receiving an invitation request sent by the IM agent, and returning a confirmation message; receiving a conference message from the IM agent, and sending a conference message to the conference room.
In this invention, a conference creating user creates a conference through the IM agent, and realizes communication of conference messages with uses and between users on various IM systems through forwarding at the IM agent.

### BRIEF DESCRIPTION OF THE DRAWINGS

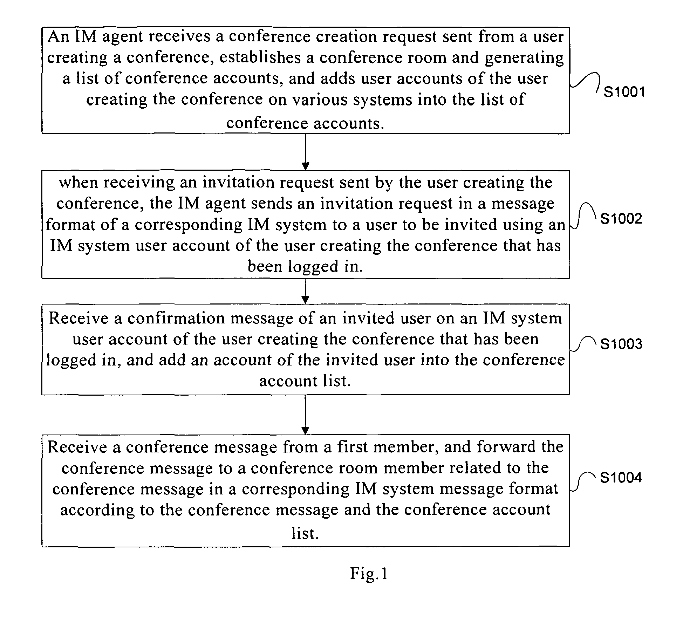

Fig. 1 is a schematic diagram of a method for having a conference across IM systems of this invention;
Fig.2 is a signaling diagram of creating a conference room in a conference across IM systems of this invention;
Fig.3 is a signaling diagram of inviting a user to enter the conference room in a conference across IM systems of this invention;
Fig.4 is a signaling diagram of a conference member user exiting the conference room in a conference across IM systems of this invention;
Fig.5 is a signaling diagram of cancelling the conference room by the conference creating user in a conference across IM systems of this invention;
Fig.6 is a signaling diagram of removing a conference member user by the conference creating user in a conference across IM systems of this invention;
Fig.7 is a signaling diagram of sending a conference message by the conference creating user in a conference across IM systems of this invention;
Fig.8 is a signaling diagram of sending a conference message by a conference member user in a conference across IM systems of this invention;
Fig.9 is a structural diagram of a system across IM systems of this invention;
Fig. 10 is a structural diagram of an IM agent across IM systems of this invention.

Several exemplary embodiments of this invention will be described and illustrated below. These embodiments are merely illustrative, and this invention can be realized in different ways.

### DETAILED DESCRIPTION OF THE EMBODIMENTS

The IM agent of this invention can be installed in a conference-creating user terminal or be presented as a server. The IM agent in this invention is considered as an IM system, which can employ the following message formats: MSNP (Microsoft Service Network Protocol) supported by MSN, a OSCAR message format supported by ICQ, a JSON (JavaScript Object Notation) message format supported by Yahoo, or an XMPP (the Extensible Messaging and Presence Protocol) message format supported by Gtalk (Google talk); the conference-creating user terminal can be a mobile phone, a PDA, a laptop, or a PC, etc; the list of conference accounts can be implemented on a DB2 database or Oracle database, or can be a data structure stored as text, HTML or XML, or an encoded file.

In the case where an IM agent is installed on the conference-creating user terminal and a conference message is forwarded to a conference creating user, forwarding the conference message in a message format of a corresponding IM system in this invention is specifically an internal communication process of the IM agent, and message formats of IM systems can be, in addition to the above mentioned generally used IM system formats, self-defined formats, primarily used by the IM agent to present conference message contents of other conference room members.

When the IM agent presents as a server and forwards the conference message to the conference creating user, specific, the IM agent, according to a receiving account and a sending account as well as a message format of an IM system to which both accounts belong, generates a conference message in said message format to complete forwarding; furthermore, as for personal chat communication and conference message communication between users logged in the IM agent through IM agent application, they can be realized on existing IM system functional architectures, such as private chat and group chat functions of chatting tools of MSN, ICQ, Yahoo, Espace, FeiQ, Gtalk and the like. For those skilled in the art, those functions can be simply realized in this invention through function transplanting.

A method of having a conference across IM systems is provided in this invention, comprising the following steps.

S1001. An IM agent receives a conference creation request sent from a conference creating user, establishes a conference room and generates a list of conference accounts, and adds user accounts of the conference creating user on various systems into the list of conference accounts.

For example, if an IM agent is installed on a conference-creating user terminal of user A creating a conference, user accounts on various IM systems include, but not limited to, an account of user A on the Yahoo IM system "userA@yahoo.com", an account of the user A on the Gtalk IM system, " userA@gmail.com".

The generated conference account list preferably comprises an interface account field and a member account field, and the accounts "userA@yahoo.com" and "userA@gmail.com" are added in the interface account field; the conference account list can further comprise a conference ID, when the conference creating user establishes a plurality of conference rooms, the IM agent may assign a conference room ID for each conference room.

S1002. receiving an invitation request sent by the conference creating user, the IM agent, uses an IM system user account of the conference creating user that has been logged in, sends an invitation request in a message format of a corresponding IM system to a user who is to be invited the conference creating user.

After receiving the invitation request, the IM agent preferably generates an invitation message according to an account of the user to be invited by the conference creating user carried in the invitation request, for example, "userB@yahoo.com", which is an account of user B to be invited on the Yahoo IM system, "userC@gmail.com", which is an account of user C to be invited on the Gtalk IM system, wherein the invitation message specifies information of the inviting user and inviting reasons; generates an invitation request in a corresponding message format according to the IM system of the user to be invited; the IM agent, uses an IM system user account of the conference creating user that has been logged in, sends the invitation request carrying the invitation message and having been converted into a corresponding message format to the user to be invited the conference creating user, wherein the accounts of invited users and the IM system user account of the conference creating user used by the IM agent belong to the same IM system, preferably selected from the interface account field of the conference account list.

For example the user A creating the conference sends an invitation request to the user B, then the IM agent selects "userA@yahoo.com" an account of the user A from the interface account field, which has been logged in and belongs to the same IM system as user B, to send a generated invitation request carrying an invitation message, wherein the converted message format is as follows.

POST /v1/message/yahoo/userB@yahoo.com? sid=msgrsessionid

Host: core1.messenger.yahooapis.com

Authorization: < Standard OAuth credentials >

Content-Type: application/json; charset=utf-8

Wherein, the Host field specifies Yahoo Messenger as a server for message communication, and the POST field specifies a target address "userB@yahoo.com"; the format conversion is preferably message conversion according to various IM system standards; the content of the invitation message can be as follows:
"You are now invited by "userA@yahoo.com" through IM Agent to enter a conference room, please reply with "ADFJKAJKYES" to confirm your enter; if refusing please reply with "ADFJKAJKNO" to refuse"

Furthermore, in the case of having a conference room ID, the conference room ID can be carried in the above invitation message and sent to user B. The particular invitation message can be shown as follows:
"You are now invited by "userA@yahoo.com" through IM Agent to enter a conference room 3222543, please reply with "ADFJKAJKYES" to confirm your entering; if refusing please reply with "ADFJKAJKNO" to refuse."

S1003. A confirmation message from an invited user is received on an IM system user account of the conference creating user that has been logged in, and an account of the invited user is added to the conference account list.

When the confirmation message returned from an invited user is received via an IM system user account of the conference creating user that has been logged in by the IM agent, the returned message is further checked as to whether it is information confirming to enter the conference room; if so, then an account of the invited user is added into the member account field of the conference account list.

If invited the user B returns a confirmation message of "ADFJKAJKYES" to the account of the user A on the Yahoo IM system "userA@yahoo.com", the IM agent fetches the confirmation message from the account "userA@yahoo.com", finds out a list of conference accounts corresponding to a conference room where the user A is present according to "userA@yahoo.com" from an existing conference account list, and adds an account of the user B "userB@yahoo.com" into that list.

Furthermore, when a conference room ID is carried in the confirmation message, the IM agent can directly find out a list of conference accounts corresponding to a conference room where the user A is present according to the conference room ID and complete the adding operation. For example, after a confirmation message carrying a conference room ID is sent by the invited the user B, the conference account list after the adding operation of the IM agent is as follows:

| Conference Room ID | Interface Account | Member Account |
|---|---|---|
| 3222543 | userA@yahoo.com | userB@yahoo.com |
| | userA@gmail.com | |

Furthermore, when there is a new conference room member to join during the conference, the conference room member can be selected by the conference creating user, and the IM agent sends conference minutes to new conference room member, that is, the IM agent sends the stored conference minutes to the selected conference room member, wherein the conference room member is a user who has received an invitation request and returned information of confirming to enter the conference room; the conference minutes are conference messages sent by conference room members.

S1004. A conference message from a first member is received, and according to the conference message and the conference account list, the conference message is forwarded to a conference room member related to the conference message in a corresponding IM system message format.

The conference message received by the IM agent can be a group conference message. When the first member is the conference creating user, preferably, invited user accounts are identified by going through the member account field of the conference account list. According to an IM system of the invited user account that have been identified, the conference message is sent in an IM system message format corresponding to the invited user account sent using a user account of user A creating the conference on the corresponding IM system in the interface account field.

When the first member is not the conference creating user, forwarding the conference message in a corresponding IM system message format to a conference room member related to the conference message according to the conference message and the conference account list particularly comprises: the IM agent converts the received conference message into an IM system message format supported by itself and forwards it to a present module on the conference-creating user terminal; the present module further presents the conference message, wherein the IM system message format supported by itself can be message formats of existing IM systems, such as MSNP, OSCAR, JSON or XMPP, or the message formats can be self-defined by the IM agent; and accounts of conference room members except for the first member and the conference creating user are identified throughout the member account field of the conference account list; the conference message is converted according to IM systems on which accounts of conference room members are registered and accounts of the user A creating the conference on those IM systems, such that conference messages after message format conversion can support message formats of corresponding IM systems, and then conference messages after message format conversion are transmitted.

The conference message received by the IM agent also can be a private conference message. When a member specified in the private conference message is the conference creating user, the IM agent converts the received conference message into an IM system message format it supports, and forwards it to a present module of a conference-creating user terminal to further present the conference message by the present module.

When the private conference message is targeted to an invited user, then a private conference user account of a member specified in the conference message is looked up in the member account field in the conference account list, and then the received conference message is converted according to an IM system on which the private member conference user account that has been found is registered, such that the conference message after message format conversion supports corresponding IM system communication; the conference message after message format conversion is sent using a user account on the corresponding IM system of user A creating the conference in the interface account field.

Further, when a conference room ID is carried in the conference message, a conference account list is preferably found out through the conference room ID to complete subsequent conference message forwarding.

In addition to the above conference message, the IM agent can also receive operation information from a conference participant. The IM agent generates a corresponding notification message according to the operation information, and selects a conference participant from the conference account list to forward the notification message. The notification message particularly comprises: participating in conference notification message, exiting conference notification message, removing conference notification message, or cancelling conference notification message.

In the above method, if the IM agent is present as a server and the conference creating user log in the IM agent using an agent account, such as "userA@imagent.com" for user A creating a conference, then the above process can further comprise:
The conference account list also comprises the agent account in addition to user accounts of the conference creating user on various IM systems; after the operation of adding accounts of invited users, the conference account list is as follows:

| Conference | Agent Account | Interface | Member |
|---|---|---|---|
| Room ID | | Account | Account |
| 3222543 | userA@imagent.com | userA@yahoo.com | userB@yahoo.com |
| | | userA@gmail.com | |

The conference message received by the IM agent can be a group conference message. When the first member is the conference creating user, accounts of invited users are preferably identified throughout the member account field of the conference account list. According to an IM system of an invited user account identified, a conference message is sent in a corresponding IM system message format using a user account on the corresponding IM system of user A creating the conference in the interface account field.

When the first member is not the conference creating user, the agent account of the conference creating user is directly accessed from the agent account field. The conference message is forwarded to the conference creating user in a message format corresponding to the IM agent. Accounts of conference room members except for the first member are gone through in the member account field in the conference account list. According to an IM system of an account of a conference room member, the received conference message is further converted using a user account on the corresponding IM system of user A creating the conference in the interface account field, so that the conference message after message format conversion supports corresponding IM system transmission. The conference message after message format conversion is sent thereafter.

The conference message received by the IM agent can be a private conference message. When the private conference message is targeted to the conference creating user, the IM agent directly accesses the agent account of the conference creating user from the agent account field, and forwards a conference message carrying a first member ID.

When the private conference message is targeted to an invited user, a private conference user account of a member specified in the conference message is looked up in the member account field of the conference account list. According to an IM system on which the private conference user account of the member that has been found is registered, a conference message carrying a first member ID is sent using a user account on a corresponding IM system of user A creating the conference in the interface account field.

Furthermore, when a conference room ID is carried in the conference message, a conference account list is preferably looked up by the conference room ID to complete subsequent conference message forwarding. The IM agent can also use the conference room ID to provide specified channel transmission for the conference creating user. For example, if a conference room ID "6d9423a55f499b29ad20" is assigned to the conference creating user, then the conference room provides a temporary account "6d9423a55f499b29ad20@imagent.com" as a dedicated channel between the conference creating user and the IM agent.

In a particular embodiment of this invention, a conference room management function is realized through the IM agent. In this embodiment, "message" and "presence" messages are illustrated as examples of IM system interactive messages; according to their permissions, conference participants include: Owner, which is usually the user creating the temporal conference room, having all permissions in the conference room comprising: cancelling conference room, removing conference room member, inviting user, sending group conference message or sending private conference message, etc; and Occupant, merely allowed for conference services, comprising: receiving or sending private conference message, group conference message, or exiting conference room, etc. In this embodiment, descriptions are made with respect to Yahoo and Gtalk as examples of IM systems. An IM agent application is installed on the terminal of the conference creating user, and XMPP protocol is employed as a communication protocol with the IM agent. User A has an agent account "userA@imagent.com" registered on the IM Agent, and logs in the IM Agent using the registered account. The IM Agent has accounts on various IM systems which are uploaded by the user A, that is, an account of the user A on the Yahoo IM system "userA@yahoo.com", an account of the user A on the Gtalk IM system "userA@gmail.com". Furthermore, an invited user B has an account on yahoo Messenger "userB@yahoo.com"; an invited user terminal C creating a conference has an account on Gtalk "userC@gmail.com".

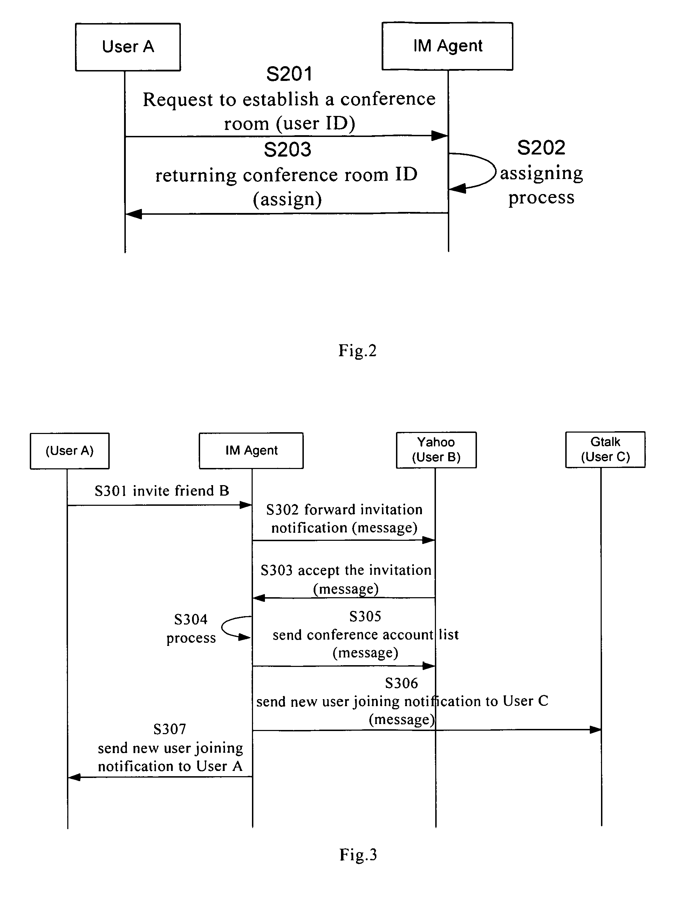

In this embodiment, the user A creating a conference sends a conference creation request to the IM agent to establish a conference room, before which the user A has successfully logged in the IM agent using "userA@imagent.com". As shown in Fig.2, the process is particularly as follows:
S201. The user A creating a conference sends a conference creation request to the IM agent, wherein the conference creation request carries a registered account of the user A on the IM Agent "userA@imagent.com" and a "get" as conference creation message type, to send the following message:

```
   <iq from='userA@imagent.com'
        id='unique1'
        to='imagent.com'
        type='get'>
        <unique xmlns='http://jabber.org/protocol/muc#unique'/>
    </iq>
```

S202. IM Agent receives the conference creation request, generates a conference account list and adds the agent account of the user A "userA@imagent.com" and user accounts on various IM systems "userA@yahoo.com" and "userA@gmail.com" to the conference account list, assigns a conference room for the user A creating the conference, wherein assigning the conference room comprises assigning a conference ID for the user A, such as "6d9423a55f499b29ad20"; the conference ID is used to, when a conference message is received, find out a conference room to which the conference message belongs, or when there are several participated conference rooms, distinguish a conference room to which the conference messages belong.
S203. IM Agent returns the conference room ID to the user A, wherein a conference room application result is notified to the user, for example, the following message is returned to the user A by the IM Agent as a result of a successful application, wherein "result" as the field "type" indicates the message is a response, "owner" as "affiliation" field indicates that the user A has been authorized as "Owner" by IM Agent, the message is as follows.

```
    <iq from='imagent.com'
        id='unique1'
        to='userA@imagent.com'
        type='result'>
        <unique xmlns='http://jabberorg/protocol/muc#unique'>
             <id=6d9423a55f499b29ad20 />
          <affiliation>owner</affiliation>
        </unique>
    </iq>
```

After the above step, a conference room with a conference room ID "6d9423a55f499b29ad20" is successfully established for the user A creating a conference by the IM Agent, and "Owner" permissions are assigned to the user A.

When a conference creation request is received, preferably, the IM Agent completes logging in accounts on various IM systems of the user A creating the conference, including "userA@yahoo.com" and "userA@gmail.com", when the user A logs in IM Agent using his agent account; also, accounts of the user A creating the conference on various IM systems can be logged in after the IM agent receiving a conference creation request; or after receiving an invitation request from the user A by the IM agent, with regard to an IM system of an invited user, an account of the user A on that IM system can be further logged in when IM Agent fails to transmit the invitation request using an account of the user A on that IM system.

In this embodiment, the user A creating the conference logs in the IM agent with an agent account. An invited user C is present in the conference room. A process of further inviting user B to enter the conference room by the user A creating the conference is shown in Fig.3, which particularly comprises the following steps:
S301. The user A creating the conference sends an invitation request to the IM agent, wherein an account of the user B is carried in the invitation request. The invitation message is generated by the IM Agent and is carried in the invitation request. The invitation message can be particularly extracted from the "reason" field in the invitation request of the user A, which is as follows:

```
   <message from='userA@imagent.com'
              to='6d9423a55f499b29ad20@imagent.com'>
      <x xmlns='http://jabberorg/protocol/muc#user'>
        <invite to='userB@yahoo.com'>
           <reason>Hey Mike, This is a cool chatting place!</reason>
        </invite>
      </x>
   </message>
```

S302. The IM Agent forwards the invitation request to the user B using an account of the user A on the Yahoo IM system "userA@yahoo.com". A message forwarding destination is specified in the invitation request by "userB@yahoo.com?sid=msgrse ssionid". The "Host" field specifies "rcorel.messenger.yahooapis.com" as a Yahoo Messenger server, the "Content-Type" field indicates that the type of the message content is a "json" protocol application, and the "charset" field specifies utf-8 as its character encoding set. The content of the invitation request is that "userA@yahoo.com" invites the user B to enter the conference room. This message is automatically generated by the IM Agent, comprising the way to accept/refuse the invitation. A specific method can comprise entering specified text verification information by the user. In this example, "ADFCRCGH" is used to accept the invitation, and the invitation can be refused through ignoring the message or entering "ADBDF", wherein the verification information can be a combination of any other characters. The particular message is as follows.

```
   POST /v 1/message/yahoo/userB@yahoo.com?sid=msgrsessionid
   Host: rcorel.messenger.yahooapis.com
   Authorization: < Standard OAuth credentials >
   Content-Type: application/json;charset=utf-8
   Content-Length: 266
    {
        "message" : " This is a notification of multiple party chatting from userA@yahoo.com,
        please accept it. Reason: Hey Mike, This is a cool chatting place! if accept, please
        reply with
        verification information "ADFCRCGH", If not, please ignore this message or Reply
        with "ADBDF". "
    }
```

S303. When the user B receives an invitation request carrying the invitation message, he can decide whether to join the conference and then reply in the way specified above. Herein, assume that the invitation is accepted by the user B, and a confirmation message of accepting the invitation is sent directly to the account of the user A on the Yahoo IM system, further, the Yahoo IM system replies with a confirmation message to "userA@yahoo.com" logged in by the IM agent. The message as reply has the following format:

```
    POST /v1/message/yahoo/userA@yahoo.com?sid=msgrsessionid
    Host: rcore1.messenger.yahooapis.com
    Authorization: < Standard OAuth credentials >
    Content-Type: application/json;charset=utf-8
    Content-Length: 10
    {
         "message" : "ADFCRCGH"
    }
```

S304. The IM Agent receives the confirmation message, and then adds the account of the user B into the member account field of the conference account list.
S305. The IM Agent sends an announcement message about this change to the user B through the account "userA@yahoo.com", including the current occupants and their associated user permission information, and a prompt to the user how to actively exit the conference room. The method can comprise entering specified text information by the user. The message is particularly as follows.

```
   POST /v1/message/yahoo/userB@yahoo.com?sid=msgrsessionid
   Host: rcore1.messenger.yahooapis.com
   Authorization: < Standard OAuth credentials >
   Content-Type: application/json;charset=utf-8
   Content-Length: 256
    {
       "message" : "[notification of muc_userA]: Mr/Mrs userB, welcome you join in the
       conference, currently there following occupants in this conference.
       1. userA@yahoo.com (owner)
       2. userC@gmail.com (occupant)
       If you want to exit the conference, you can input 'DFKLHSDFEF'"
    }
```

S306. The IM Agent goes through the member account field of the conference account list. When it reaches an account of the member user C, and it is recognized that the user C has an account on the Gtalk IM system "userC@gmail.com". Furthermore, the IM Agent finds out an account "userA@gmail.com" corresponding to the Gtalk IM system in the interface account field. A cancelling conference announcement message to be forwarded to the user C is generated based on a message format of the Gtalk IM system on which the accounts "userC@gmail.com" identified and "userA@gmail.com" found above are established, with content of the newest status of the current conference room, including conference room members and their associated user permission information, wherein "body" label is the main portion of the information, including information of users joining the conference and their permissions that will be notified to the user C. The message is particularly as follows:

```
   <message to="userC@gmail.com" type="chat" id="31 ">
       <body> [notification of muc _A]:the new occupant userB@yahoo.com had joined the
       conference, currently following occupants is in conference:
       1. userA@gmail.com(owner)
       2. userC@gmail.com(occupant)
       3. userB@yahoo.com(occupant)
       </body>
       <active xmlns="http://jabber.org/protocol/chatstates"/>
   </message>
```

S307. the IM Agent finds out "userA@imagent.com" according to the agent account field of the conference account list, and further sends an announcement message of joining the conference to user A, with content of the newest status of the current conference room, including conference room members and their associated permission information. The message is labeled as "presence", and is sent to the agent account on the IM Agent of user A using a conference ID account. The content of the "jid" field is an account of the joined user "userB@yahoo.com", and the status field indicates that the status of user B is "available".

```
   <presence from='6d9423a55f499b29ad20@imagent.com'
               to='userA@ imagent.com'>
      <x xmins='http://jabber.org/protocol/muc#user'>
           <jid='userB@yahoo.com' status= 'available'/>
      </x>
   </presence>
```

Furthermore, the user A can specify the newly joined conference room member user B, and sends a synchronized conference history request to the IM agent. After receiving a request for sending conference minutes to the selected conference room member B from the user A creating the conference, the IM agent sends the stored conference minutes to the selected conference room member B, wherein the conference minutes comprise conference messages communicated between the conference room members A and C.

Inviting a user to join a conference can also comprise associating accounts of a user on various IM systems to a user note in a user list of the IM agent application. For example, an account of the user B on Yahoo "UserB@Yahoo.com" and an account of the user B on Gtalk "UserB@Gtalk.com" are associated to a user note "user B". When it is intended to invite the user B to join the conference, an invitation request can be sent to an account in the user note, wherein a group conference apparatus preferably sends the invitation request to an online account in the user note; the group conference apparatus can be an the IM Agent application installed on a terminal.

When none of the accounts on various IM systems associated with the user note is online, the group conference apparatus sends the invitation request to each IM system associated with the user note, the IM agent adds the IM system account returning the confirmation message earliest into the conference, and ignores replies from other IM system accounts associated with the user note.

Furthermore, when a response time for the invited user expires, the IM agent sends an announcement message to the user A to prompt the user A whether to send conference minutes to the user B's account if the user B has not logged in with his account or returned a confirmation message until the conference is over, wherein the conference minutes can be text or in a message format of the IM system.

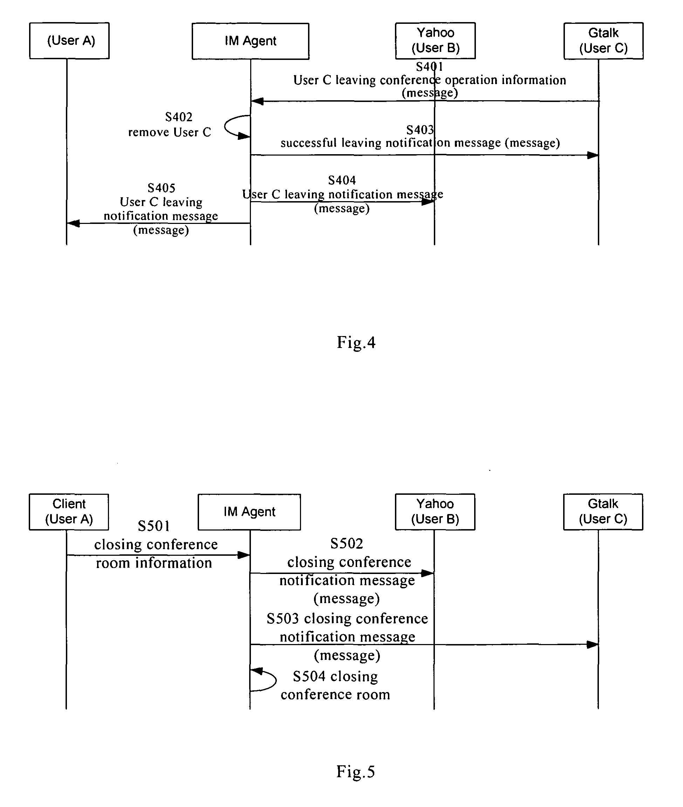

In this embodiment, the invited user B and the invited user C have both joined the conference. A signaling diagram for the invited user C to exit the temporary conference room is shown in Fig.4, particularly comprising the following steps:
S401. The conference room member user C sends a leaving conference room request to the 1M Agent. When the user C actively exits the conference room, he has to send a leaving request according to a specified manner, particularly, the user C may send specified text information as follows.

```
   <message to="userA@gmail.com" type="chat" id="31 ">
       <body> DFKLHSDFEF </body>
       <active xmlns="http://jabber.org/protocol/chatstates"/>
   </message>
```

If the invited user passively exits the conference room due to an unexpected event, such as, disconnection by the user, then the IM system of the invited user may send a message of "Presence" type to the IM Agent. The IM agent identifies such operation information and generates a leaving conference announcement from that message. For example, if the user C exits passively, then the Gtalk IM system sends an offline notification message to the account "userA@gmail.com" logged on the IM Agent, wherein "unavailable" in the "type" field indicates that the user C is in offline status. The message is as follows:
<presence from="userC@gmail.com/talk.v105691189CB"
type="unavailable" to=" userA@gmail.com"/>
S402. The IM Agent acquires leaving conference information of the user C, including actively leaving the conference room or passively leaving the conference room in an unexpected event by the user C, and then the IM Agent removes the user C from the conference room, particularly through deleting the account of conference room member user C from the conference account list.
S403. The IM Agent generates a successful exiting notification message in a message format supported by the Gtalk IM system, and sends the successful exiting notification message to the user C through the account "userA@gmail.com" as follows.

```
    <message to="userC@gmail.com" type="chat" id="31">
       <body> [notification of muc_userA]:you have left the conference successfully.
   </body>
       <active xmlns="http://jabber.org/protocol/chatstates"/>
    </message>
```

S404. The IM Agent goes through the member account field of the conference account list, and identifies that the user B has an account on the Yahoo IM system when it reaches the user B. Furthermore, the IM Agent finds out a corresponding account "userA@yahoo.com" on the Yahoo IM system in the interface account field. A notification message about the user C exiting the conference room to be forwarded to the user B is generated based on a message format of the Yahoo IM system on which the accounts "userB@yahoo.com" identified and "userA@yahoo.com" found above are registered, which is in particular as follows.

```
    POST /v1/message/yahoo/userB@yahoo.com?sid=msgrsessionid
    Host: rcorel.messenger.yahooapis.com
    Authorization: < Standard OAuth credentials >
    Content-Type: application/json;charset=utf-8
    Content-Length: 248
    {
       "message" : " [notification of muc_userA]: userc@gmail.com has left the conference,
       currently there following occupants in this conference.
       1. userA@yahoo.com(owner)
       2. userB@yahoo.com(occupant)
       If you want to exit the conference, you can input 'DFKLHSDFEF'"
    }
```

S405. The IM Agent then acquires the agent account of the user A from the agent account field of the conference account list, and sends the leaving conference room notification message of the user C to the user A using the agent account of the user A. The notification message supports channel transmission of the Agent IM system, and the message is as follows.

The message sent to user A is as follows:

```
    <presence from='6d9423a55f499b29ad20@imagent.com'
          to='userA@imagent.com'/>
      <x xmlns='http://jabber.org/protocol/muc#user'>
        <jid='userC@yahoo.com' status = 'unavailable'/>
      </x>
    </presence>
```

In this embodiment, the user A creating the conference and invited users B, C are already conference room members, a signaling diagram for the user A exiting the conference room is further shown in Fig.5, particularly comprising the following steps:
S501. The user A exits the conference room, and then the whole conference will be cancelled because the user A is the owner of the conference room. The user A can exit the conference room in two ways.
   1. The user A actively exits the conference room. The user A sends a cancelling conference room request to the IM Agent. The request carries an instruction to cancel the conference room and an optional cancelling reason. In this case, the "destroy id" field specifies that a conference room with a conference id 6d9423a55f499b29ad20 will be destroyed; "reason" label provides a destroy reason when a conference destroy notification is sent to the users B and C by the IM Agent. The cancelling conference room request is as follows:

```
   <iq from='userA@imagent.com'
        id='end1'
        to='6d9423a55f499b29ad20@imagent.com'
        type='set'>
      <query xmlns='http://jabber.org/protocol/muc#owner'>
        <destroy id ='6d9423a55f499b29ad20'>
               <reason>conference end</reason>
           </destroy>
      </query>
   </iq>
```

2. The user A exits passively. Particularly, when the IM Agent detects that the user A is offline, it destroys the conference room automatically.

S502. The IM agent goes through the member account field of the conference account list, and identifies that the user B has an account on the Yahoo IM system "userB@yahoo.com" when it reaches the user B. Furthermore, the IM Agent finds out a corresponding account "userA@yahoo.com" on the Yahoo IM system in the interface account field. A conference deregistration notification to be forwarded to user B is generated based on message format of the Yahoo IM system on which the accounts "userB@yahoo.com" identified and "userA@yahoo.com" found above are registered. The message is particularly as follows:

```
   POST /v1/message/yahoo/userB@yahoo.com?sid=msgrsessionid
   Host: rcore1.messenger.yahooapis.com
   Authorization: < Standard OAuth credentials >
   Content-Type: application/json;charset=utf-8
   Content-Length: 91
   {
       "message" : " [notification of muc_userA]: the temporary conference has ended. reason:
       conference end."
   }
```

S503. When the IM agent reaches the account "userC@gmail.com", a conference deregistration announcement message to be forwarded to the conference member user C is generated according to "userC@gmail.com", "userA@gmail.com", and the Gmail IM system they are registered on. The message is constructed for notifying the user C of the end of the conference. The message is particularly as follows.

```
    <message to="userC@gmail.com" type="chat" id="31">
       <body> [notification of muc_userA]: the temporary conference has ended (reason:
       conference end).</body>
       <active xmlns="http://jabber.org/protocol/chatstates"/>
   </message>
```

S504. The IM agent destroys the conference room, reclaims resources allocated to the conference room, which particularly comprises releasing the conference room ID and the conference account list.

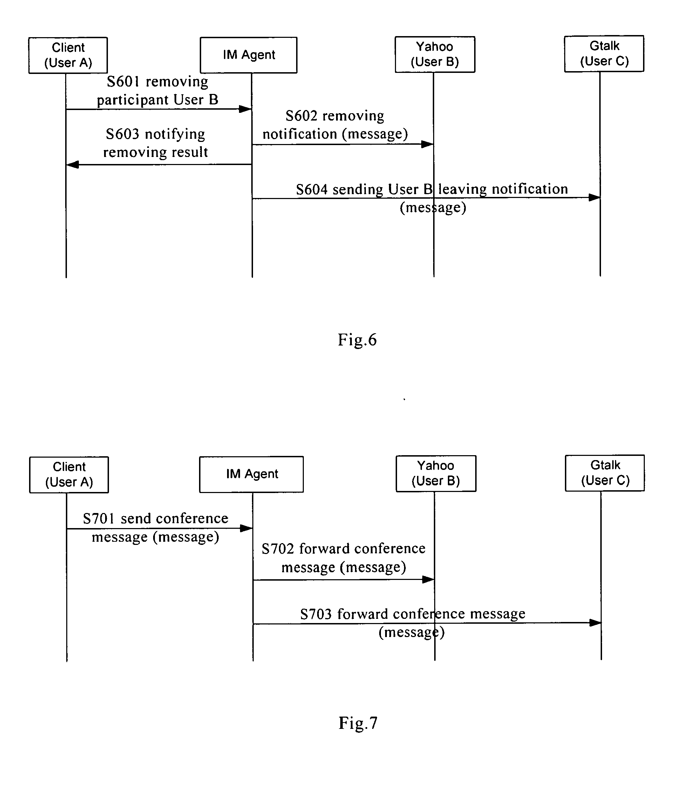

In this embodiment, the conference room comprises user C, a signaling flow of removing the conference room member user B from the conference room by the user A is shown in Fig.6, particularly comprising the following steps:
S601. The user A sends a request of removing the user B with occupant permissions to the IM agent, wherein the removing request comprises a request for removing action and a reason; this operation does not need to be confirmed or permitted by the user B. The user B is requested to be removed from the conference room, wherein the "remove" field specifies that a user with "userB@yahoo.com" as "jid" will be removed. The message is as follows.

```
   <iq from='userA@imagent.com'
        id='kick1'
        to='6d9423a55f499b29ad20@imagent.com'
        type='set'>
      <query xmlns='http://jabber.org/protocol/muc#admin'>
        <remove jid = 'userB@yahoo.com'>
           <reason>your business has finished</reason>
        </remove>
      </query>
   </iq>
```

S602. The IM Agent recognizes that the user B has an account on the Yahoo IM system, i.e. "userB@yahoo.com", and further finds out a corresponding account "userA@yahoo.com" on the Yahoo IM system from the interface account field. A removing notification message to be forwarded to the user B is generated based on message format of the Yahoo IM system based on the accounts "userB@yahoo.com" identified above and "userA@yahoo".com found to notify the conference room member user B is to be removed. The message carries the reason described above and the message is as follows:

```
   POST /v1/message/yahoo/userB@yahoo.com?sid=msgrsessionid
   Host: rcore1.messenger.yahooapis.com
   Authorization: < Standard OAuth credentials >
   Content-Type: application/json;charset=utf-8
   Content-Length: 109
    {
       "message" : " [notification of muc_userA]: you has been removed from the conference,
       reason: your business is finished)."
   }
```

S603. The IM Agent returns an operation result notification message to the requesting user A by the conference ID account. The message is as follows.

```
   <iq from='6d9423a55f499b29ad20@imagent.com'
        id='kick1'
        to='userA@imagent.com'
        type='result'/>
```

S604. The IM Agent goes through the member account field of the conference account list. When the account of the user C "userC@yahoo.com" is identified, a notification of removing the user B is sent to the user C, in which the message label "body" comprises information of removed the user B and information of other users remained in the conference room. The user information comprises user accounts of conference room members, and optionally, their permissions. The message is as follows.

```
   <message to="userC@gmail.com" type="chat" id="31">
       <body>[notification of muc_userA]: userB@gmail.com has left the conference,
       currently there following occupants in this conference.
       1. userA@gmail.com(owner)
       2. userC@gmail.com(occupant)
   If you want to exit the conference, you can input 'DFKLHSDFEF' </body>
       <active xmlns="http://jabber.org/protocol/chatstates"/>
   </message>
```

In this embodiment, a conference room has been established successfully. The user A is the conference creating user, the users B and C are present as conference room members. A signaling flow of sending a text message by the user A is shown in Fig.7, particularly comprising the following steps.
S701. The user A sends a conference message to the conference room. Destination address of the message is the conference ID account assigned by the IM Agent. The message is in the following format.

```
   <message from='userA@imagent.com'
              to='6d9423a55f499b29ad20@imagent.com'
               type=' groupchat'/>
        <body>hello</body>
   </message>
```

S702. The IM agent goes through the member account field of the conference account list. When the account of the user B "userB@yahoo.com" is identified, and a corresponding account of "userA@yahoo.com" on Yahoo IM system is found out by the IM Agent in the interface account field. A group conference message for the user B is generated based on message format of the Yahoo IM system on which the accounts "userB@yahoo.com" identified and "userA@yahoo.com" found above are registered. The group conference message sent to the user B is in the following message format:

```
   POST /v1/message/yahoo/userB@yahoo.com?sid=msgrsessionid
   Host: rcorel.messenger.yahooapis.com
   Authorization: < Standard OAuth credentials>
   Content-Type: application/json;charset=utf-8
   Content-Length: 68
    {
       "message" : " [notification of muc_userA] <message from
   userA@yahoo.com>:hello "
   }
```

S703. The IM agent goes through the member account filed of the conference account list. When the account of user C "userC@gmail.com" is identified, as in step S702, a group conference message is generated for the user C according to the found "userA@gmail.com". The group conference message to be sent to the user C is in the following message format:

```
   <message to="userC@gmail.com/talk.v105691189CB " type="chat" id="31">
       <body>[notification of muc_userA] <message from userA@gmail.com>: hello
   </body>
           <active xmlns="http://jabber.org/protocol/chatstates"/>
   </message>
```

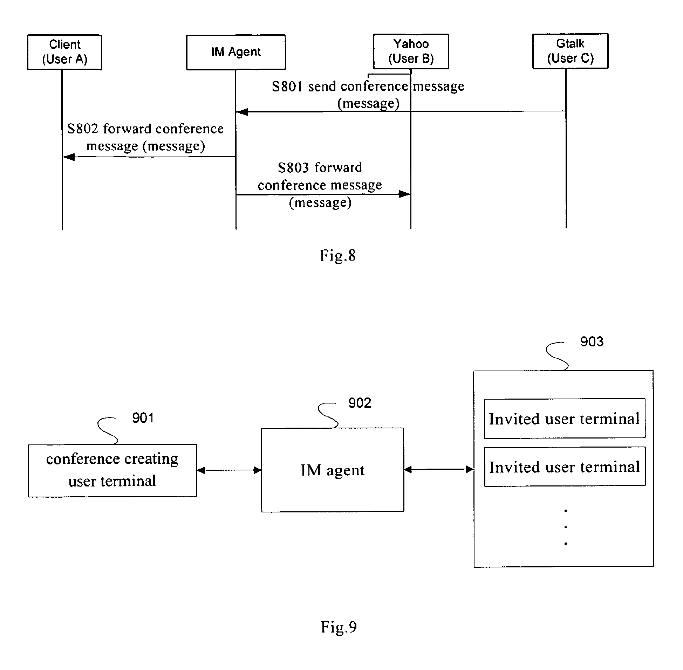

In this embodiment, a conference room has been established successfully, and the user A is the conference creating user, the users B and C are present as conference room members. A signaling flow of sending a text message by the user C who is an invited member is shown in Fig. 8, particularly comprising the following steps:
S801. When the conference room member user C sends a group conference message.
   Particularly, a message is sent to the corresponding user creating the conference through the Gtalk IM system, i.e., to the account "userA@gmail.com" in the same IM system. The conference message is in the following format:

```
   <message to="userA@gmail.com" type="chat" id="32">
       <body>/6d9423a55f499b29ad20: hello </body>
       <active xmlns="http://jabber.org/protocol/chatstates"/>
   </message>
```

S802. When the account "userA@gmail.com" that has been logged in by the IM agent has received the group conference message, an agent account of the conference creating user is acquired from the agent account field of the conference account list. The IM agent further converts the group conference message to a message format supported by the agent account. The group conference message to be forwarded to user A is in the following format:

```
    <message from ='6d9423a55f499b29ad20 @imagent.com'
                 to ='userA@imagent.com'
                type='groupchat'/>
    <jid> userC@gmail.com</jid>
        <body>hello</body>
    </message>
```

S803. The IM agent goes through the member account field in the conference account list. With regard to the IM system of the account of the conference room member user B "userB@yahoo.com", "userA@yahoo.com" on the same Yahoo IM system is acquired through looking up in the agent account field. Furthermore, according to "userB@yahoo.com", "userA@yahoo.com", an IM system to which both the accounts belong and the content of the conference message, the IM agent generates and forwards a conference message in a message format of a corresponding IM system. The message format is particularly as follows:

```
    POST /v1/message/yahoo/userB@yahoo.com?sid=msgrsessionid
    Host: rcore1.messenger.yahooapis.com
    Authorization: < Standard OAuth credentials >
    Content-Type: application/json;charset=utf-8
    Content-Length:67
    {
       "message" : " [notification of muc_userA] <message from
   userC@gmail.com>:hello"
    }
```

In some temporary multiuser conference solutions, a conference room member can initiate a private conference message communication with a participant. Optionally, such a function can be supported in an embodiment of this invention. Compared with the above solutions, the following adjustments have to be made to the IM agent.
1. After an invited user entered the conference room, a prompt of how to send a private chat message is further carried in notification messages sent by the IM agent, in which a private chat command and a target user of the private chat are contained, for example:
   [notification of muc_A]: Mr/Mrs userB, welcome you join in the conference, currently there following occupants in this conference.
      1. userA@yahoo.com(owner)
      2. userC@gmail.com(occupant)
         If you want to leave the conference, you can input the 'DFKLHSDFEF'.
         If you want to send message only to the user C, you can input the message by following pattern: '/privatechat'+ users jid + message. For example: when you want to send message(hello) to mike@gtalk.com. You can input: '/privatechat mike hello'.
2. The invited user sends a message in the specified way as follows.
   /privatechat userc@gmail.com hello.
3. the IM Agent receives the message and identifies the target object to which the message will be sent according to keywords. A private conference message is generated and forwarded to the target object. For example, a private conference message sent to the user B from the user A is in the following format.

```
   <message from='userA@imagent.com'
              to='6d9423a55f499b29ad20@imagent.com'
                type='privatechat'/>
           <item>
                <jid> userB@yahoo.com</jid>
           </item>
           <body>hello</body>
       </message>
```

4. the IM Agent sends the private conference message to the conference room member user B as follows.
   [conference] <private message from userA@yahoo.com>: hello
5. the IM Agent receives the private conference message from user B, which constructs the following private conference message to be sent to user A.

```
   <message from='6d9423a55f499b29ad20@muc.chinaunicom.com'
              to='userA@imagent.com'
                type='privatechat'/>
               <jid>userB@yahoo.com</jid>
        <body>hello</body>
   </message>
```

With this invention, a user can have a multiuser conference with friends in various IM systems simultaneously through the IM Agent. Indirectly, the IM Agent provides a means for communicating among users in various IM systems. Meanwhile, only fundamental "message" and "presence" messages are used as carriers in the solution, and it is unnecessary for IM systems to make any actions to adapt the solution.

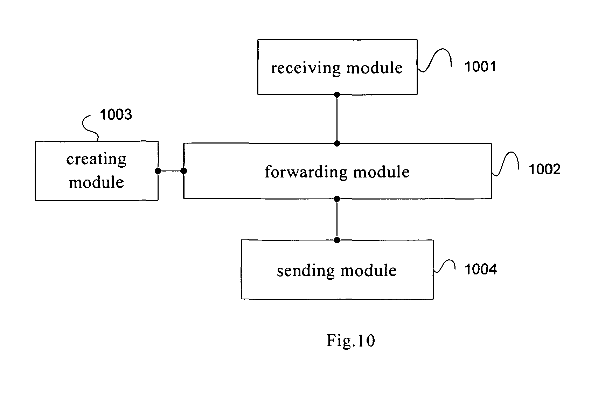

A system for having a conference across IM systems is provided in an embodiment of this invention as shown in Fig.9, comprising:
a conference creating user terminal 901, for sending a conference creation request, sending an invitation request containing an account of an invited user after a conference room has been established; receiving a conference message from an IM agent and sending a conference message to the conference room;
an IM agent 902, for receiving a conference creation request sent by a conference creating user, establishing a conference room and generating a list of conference accounts, and adding user accounts on various IM systems of the conference creating user into the list of conference accounts; receiving an invitation request sent by the conference creating user; .sending an invitation request in a corresponding IM system message format to an invited user using an IM system user account of the conference creating user that has been logged in, wherein the IM system user account of the conference creating user that is used to send the invitation request and an account of the invited user belong to the same IM system; receiving a confirmation message from the invited user using the IM system user account of the conference creating user that has been logged in, and adding the account of the invited user into the list of conference accounts; receiving a conference message from a first member, the first member being one of conference room members consisted of the conference creating user and one or more invited users; according to the conference message and the list of conference accounts, forwarding the conference message in a message format of a corresponding IM system to a conference member related to the conference message;
an invited user terminal 903, for receiving an invitation request sent by the IM agent, and returning a confirmation message; receiving a conference message from the IM agent, and sending a conference message to the conference room.
An IM agent across IM systems is provided in an embodiment of this invention as shown in Fig. 10, comprising:
   a receiving module 1001, for receiving a conference creation request from a conference creating user; receiving an invitation request of the conference creating user and a confirmation message of a corresponding user who has been invited, the invitation request comprising an account of a user to be invited; receiving conference messages from the conference creating user and invited users;
   a forwarding module 1002, for generating an invitation request in a message format corresponding to the IM system of an invited user according to a list of conference accounts and the invitation request; generating a conference message in a message format of a corresponding IM system according to the list of conference accounts and a conference room member related to the conference message;
   a creation module 1003, for establishing a conference room and generating a list of conference accounts according to the conference creation request; adding user accounts on various IM systems of the conference creating user to the list of conference accounts; adding accounts of users who have been invited to the list of conference accounts according to confirmation messages;
   a sending module 1004, for sending an invitation request subjected to message format conversion of the forwarding module to an invited user using an IM system user account of the conference creating user that has been logged in, wherein the IM system user account of the conference creating user used to send the invitation request and an account of the invited user belong to the same IM system; according to the conference message and the list of conference accounts, sending a conference message subjected to message format conversion of the forwarding module to a conference room member related to the conference message.

The receiving module is further used to receive operation information, and transmit the operation information to the forwarding module. The operation information comprises joining conference operation information, leaving conference operation information, removing from conference operation information, and cancelling conference operation information. The forwarding module is further used to generate a notification message in a message format corresponding to an IM system of a second member according to the received operation information of the second member and the conference account list, wherein the notification message comprises: joining conference notification message, leaving conference notification message, removing from conference notification message, or cancelling conference notification message. The sending module is further used to send the notification message.

From the description of the above embodiments, those skilled in the art may clearly understand that this invention can be realized by hardware, or software plus a necessary general purpose hardware platform. Based upon such understanding, the technical solutions of the invention can be embodied in the form of a software product, which can be stored in a storage medium (CD-ROM, flash memory, mobile HD, etc) including several instructions to cause a computer device (which may be a private computer, a server, a network device, etc.) to perform the methods according to the respective embodiments of the invention.

Those skilled in the art can understand that accompanying drawings are merely preferable embodiments, modules or flow blocks in the drawings are not necessarily required to realize this invention.

Those skilled in the art may understand that modules in the device of the embodiment can be arranged in a device as described, or modifications can be made to arrange those modules into one or more devices different from that of this embodiment. Modules of the above embodiment can be combined into one module, or can be further divided into multiple sub-modules.

In summary, the above are merely preferable embodiments of the present invention, not for limiting the protection scope of the present invention. Any modification, substitution, or improvement within the scope of this invention shall be covered by the protection scope of the present invention.

## Claims

1. A method for having a conference across IM systems, **characterized in** comprising:
an IM agent receiving a conference creation request sent from a conference creating user, establishing a conference room and generating a list of conference accounts, and adding user accounts of the conference creating user on various IM systems to the list of conference accounts;
receiving an invitation request sent from the conference creating user, the invitation request comprising an account of a user to be invited; the IM agent sending an invitation request in a message format of a corresponding IM system to the user to be invited using an IM system user account of the conference creating user that has been logged in, wherein the IM system user account of the conference creating user that is used to send the invitation request and the account of the user to be invited belong to the same IM system;
receiving a confirmation message from the invited user using the IM system user account of the conference creating user that has been logged in, and adding the account of the invited user into the list of conference accounts;
receiving a conference message from a first member, the first member being one of conference members, wherein the conference members consisted of the conference creating user and invited users who have returned their confirmation messages; according to the conference message and the list of conference accounts, forwarding the conference message to a conference member related to the conference message in a message format of a corresponding IM system.

2. The method according to claim 1, **characterized in that** sending the conference creation request by the conference creating user particularly comprises: logging in the IM agent using an agent account by the conference creating user, and sending the conference creation request to the IM agent;
the IM agent receiving the conference creation request sent from the conference creating user, establishing the conference room and generating the list of conference accounts, adding user accounts of the conference creating user on various IM systems to the list of conference accounts particularly comprises: receiving the conference creation request sent from the conference creating user through the agent account, establishing the conference room and generating the list of conference accounts, and adding the agent account and the user accounts of the conference creating user on various IM systems to the list of conference accounts;
forwarding the conference message to a conference room member related to the conference message in a message format of a corresponding IM system according to the conference message and the list of conference accounts further comprises: forwarding to the conference creating user using the agent account when it is needed to forward the conference message to the conference creating user.

3. The method according to claim 1 or claim 2, **characterized in that** the IM agent further assigns a conference room ID to the conference room;
the IM agent receiving the conference creation request sent from the conference creating user, establishing the conference room and generating the list of conference accounts, adding user accounts of the conference creating user on various IM systems to the list of conference accounts further comprises:
receiving the conference creation request sent by the conference creating user, assigning a conference room ID, wherein the conference account list corresponds to the conference room ID,
wherein the conference room ID and an invited user account are carried in the invitation request;
receiving the conference message from the first member further comprises: carrying the conference room ID in the conference message; and looking up the conference account list by the IM agent according to the conference room ID carried in the conference message.

4. The method according to claim 1, claim 2, or claim 3, **characterized in** further comprising: IM agent storing conference messages sent by conference room members as conference minutes;
when receiving a request of sending the conference minutes to a selected conference room member from the conference creating user, the IM agent sending the stored conference minutes to the selected conference room member, wherein the conference minutes comprise conference messages sent by conference room members.

5. The method according to claim 1, 2, 3 or 4, **characterized in** receiving the conference message from the first member further comprises:
the IM agent receiving operation information of a second member, wherein the second member is one of the conference room members;
the IM agent selecting a conference room member from the conference account list according to the operation information, and generating a notification message in a corresponding IM system message format.

6. The method according to claim 5, **characterized in that** the notification message particularly comprises: joining conference notification message, leaving conference notification message, removing from conference notification message, or cancelling conference notification message.

7. The method according to any one of claim 1 to 6, **characterized in that** the conference message is particularly a group conference message or a private conference message;
when the conference message is the group conference message, forwarding the conference message to a conference room member related to the conference message in a message format of a corresponding IM system according to the conference message and the list of conference accounts comprises: forwarding the group conference message in message formats of corresponding IM systems to other users of the conference room members by the IM agent according to the conference account list;
when the conference message is the private conference message, forwarding the conference message to a conference room member related to the conference message in a message format of a corresponding IM system comprises: the IM agent forwarding the private conference message to the specified member of the conference room members in the message format of the corresponding IM system of the specified member.

8. An IM agent across IM systems, **characterized in** comprising:
a receiving module, for receiving a conference creation request from a conference creating user; receiving an invitation request of the conference creating user and a confirmation message of a corresponding invited user, the invitation request comprising an account of the invited user; receiving conference messages from the conference creating user and invited users;
a creation module, for creating a conference room and generating a list of conference accounts according to the conference creation request, and adding user accounts on various IM systems of the conference creating user to the list of conference accounts; adding accounts of invited users to the list of conference accounts according to their confirmation messages;
a forwarding module, for generating an invitation request in a message format corresponding to an IM system of the invited user according to the list of conference accounts and the invitation request; generating a conference message in a message format of a corresponding IM system according the list of conference accounts and a conference room member related to the conference message;
a sending module, for sending the invitation request subjected to message format conversion of the forwarding module to an invited user using an IM system user account of the conference creating user that has been logged in, wherein the IM system user account of the conference creating user used to send the invitation request and the account of the invited user belong to the same IM system; sending a conference message subjected to message format conversion of the forwarding module to a conference room member related to the conference message according to the conference message and the list of conference accounts.

9. The apparatus according to claim 8, **characterized in that** the receiving module is further used to receive operation information, particularly comprising:
the receiving module receiving operation information of a second member, and sending the operation information to the forwarding module, wherein the operation information comprises: joining conference operation information, leaving conference operation information, removing from conference operation information, or cancelling conference operation information;
the forwarding module generating a notification message in a message format corresponding to an IM system of a selected conference room member according to the received operation information of the second member and the conference account list, wherein the notification message comprises: a joining conference notification message, a leaving conference notification message, a removing from conference notification message, or a cancelling conference notification message;
the sending module is further used to send the notification message.

10. A system of having a conference across IM systems, **characterized in** comprising:
a conference-creating user terminal, for sending a conference creation request, and sending an invitation request after a conference room has been created, the invitation request containing an account of an invited user; receiving a conference message from an the IM agent and sending a conference message to the conference room;
an IM agent, for receiving a conference creation request sent by a conference creating user, establishing a conference room and generating a list of conference accounts, adding user accounts on various IM systems of the conference creating user into the list of conference accounts; receiving an invitation request sent by the conference creating user; the IM agent sending an invitation request in a message format of an IM system to an invited user using a corresponding IM system user account of the conference creating user that has been logged in, wherein the IM system user account of the conference creating user that is used to send the invitation request and the account of the invited user belong to the same IM system; receiving a confirmation message from the invited user using the IM system user account of the conference creating user that has been logged in, and adding the account of the invited user into the list of conference accounts; receiving a conference message from a first member, the first member being one of conference room members consisted of the conference creating user and one or more invited users; forwarding the conference message in a message format of a corresponding IM system to a conference member related to the conference message according to the conference message and the list of conference accounts;
an invited user terminal, for receiving an invitation request sent by the IM agent, and returning a confirmation message; receiving a conference message from the IM agent, and sending a conference message to the conference room.
